# EUROPÄISCHE PATENTSCHRIFT

(11) **EP 1 741 581 B1**
(45) Veröffentlichungstag und Bekanntmachung des Hinweises auf die Patenterteilung: **29.04.2009**
(21) Anmeldenummer: 05291466.0
(22) Anmeldetag: 05.07.2005
(51) Int. Cl.: B60H 1/00

(54) **Fondbelüftungs-, Heizungs- oder Klimaanlage**
Rear ventilating, heating or cooling system
Appareil de ventilation, chauffage et climatisation pour l'arrière

(43) Veröffentlichungstag der Anmeldung: 10.01.2007
(73) Patentinhaber: Behr France Rouffach SAS, 68250 Rouffach (FR)
(72) Erfinder: Barberger, Vincent, 67600 Selestat (FR); Fuentes, Céline, 68124 Logelbach (FR)
(74) Vertreter: Grauel, Andreas

(56) Entgegenhaltungen:
- EP-A- 1 090 785
- EP-A- 1 574 369
- DE-A1- 10 147 113

## Beschreibung

Die Erfindung betrifft eine Fondbelüftungs-Heizungs- oder -Klimaanlage gemäß dem Oberbegriff des Anspruchs 1.

In der Mittelkonsole angeordnete Fondklimaanlagen haben - im Gegensatz zu Frontklimaanlagen, welche zur Luftverteilung auf die unterschiedlichen Düsen (Belüftung, Fußraum, Defrost) mehrere Klappen aufweisen, - üblicherweise keine Klappen zur Luftverteilung auf die verschiedenen Düsen (Fondmitteldüse und Düsen in den B-Säulen). In teueren Lösungen sind regelbare Luftverteilungsklappen bekannt.

In der nachveröffentlichte Offenbarung EP 1 574 369 ist eine Fondklimaanlage offenbart, wobei ein Bypass-Kanalbauteil zur Führung eines geringen Anteils warmer Luft direkt in den Fußraumauslass vorhanden ist.

Es ist Aufgabe der Erfindung, eine verbesserte, jedoch kostengünstige Fondbelüftungs-Heizungs- oder -Klimaanlage zur Verfügung zu stellen.

Diese Aufgabe wird gelöst durch eine Fondbelüftungs-Heizungs- oder -Klimaanlage mit den Merkmalen des Anspruchs 1. Vorteilhafte Ausgestaltungen sind Gegenstand der Unteransprüche.

Erfindungsgemäß ist eine Fondbelüftungs-Heizungs- oder -Klimaanlage für ein Fahrzeug mit einem in einem Gehäuse angeordneten Gebläse und einem einem Luftkanalsystem mit zumindest einer ersten und einer zweiten Düse, wobei über das Luftkanalsystem Luft den Düsen zuführbar ist, wobei im Gehäuse mindestens eine Trennwand für die Luftverteilung auf die erste und zweite Düse vorgesehen ist, und die Luftverteilung durch die Anordnung der Trennwand oder Trennwände festgelegt ist. Durch das Vorsehen von Trennwänden erfolgt auf einfache Weise eine auf die unterschiedliche Kanalgeometrie, d.h. insbesondere die unterschiedliche Kanallänge, der unterschiedliche Kanalquerschnitt und der unterschiedliche Kanalverlauf zwischen Gebläse und den Düsen, und die damit verbundenen unterschiedlichen Druckverluste abstimmbare Aufteilung der Luftströme auf die Düsen, wobei es sich vorzugsweise um zwei oder mehr, insbesondere an gegenüberliegenden Fahrzeugseiten vorgesehene B-Säulendüsen und die Mitteldüse(n) handelt. Beispielsweise sind auch entsprechende Maßnahmen für eine gleichmäßige Verteilung der Luft auf rechts und links im Fußraum eines Insassen angeordnete Düsen möglich, bei welchen sich die Kanallängen und - verläufe, ggf. auch die Kanalquerschnitte, und somit die Druckverluste zwischen Gebläse und jeweiliger Düse unterscheiden. Zusätzliche Maßnahmen zur Regelung der Luftverteilung, d.h. insbesondere regelbare Klappen und deren Stellantriebe, können entfallen, so dass die Klimaanlage im Wesentlichen ohne Komfortverlust kostengünstig herstellbar ist. Die Trennwände können sowohl fest mit dem Gehäuse verbunden als auch in das Gehäuse einsetzbar sein. Bei entsprechender Ausgestaltung können die Trennwände auch für unterschiedliche Kraftfahrzeuge unterschiedlich im Gehäuse positionierbar sein, so dass nur eine Gehäuseform für verschiedene Anwendungsfälle realisierbar ist.

Neben dem Gebläse und/der oder den Trennwänden ist im Gehäuse vorzugsweise auch ein Verdampfer und/oder ein Heizer für die Klimatisierung vorgesehen.

Die Trennwand oder die Trennwände beginnen - in normaler Luftströmungsrichtung gesehen - vorzugsweise direkt nach einem Verdampfer, der im Gehäuse angeordnet ist, wodurch eine gleichmäßige, kaum durch äußere Bedingungen beeinflussbare Luftverteilung auf die einzelnen Düsen erfolgt, wodurch eine angenehme, gleichmäßige Klimatisierung des Fahrzeuginnenraums auf beiden Seiten sichergestellt werden kann.

Bevorzugt ist eine senkrecht zur Mittelebene der Fondbelüftungs-Heizungs- oder -Klimaanlage, vorzugsweise waagerecht angeordnete Trennwand vorgesehen. Auf Grund der üblicherweise symmetrischen Ausgestaltung der Luftkanäle zu den B-Säulendüsen sind keine besonderen Maßnahmen zur Luftverteilung auf dieselben erforderlich, da sich bei einander entsprechenden Druckverlusten automatisch eine gleichmäßige Luftverteilung einstellt. Für die Verteilung der Luft auf die B-Säulendüsen einerseits und die Mitteldüse(n) andererseits ist somit eine einzige, quer verlaufende Trennwand ausreichend, so dass dies eine besonders kostengünstige Ausgestaltung der Fondklimaanlage ermöglicht.

Um eine verbesserte Temperierung der Luft zu ermöglichen, ist vorzugsweise ein Bypass um den Verdampfer vorgesehen. Dieser ist bevorzugt oberhalb des Verdampfers angeordnet, wobei der Verdampfer bevorzugt schräg im Gehäuse angeordnet ist, um Bauraum zu sparen.

Für eine konstante Luftverteilung sind vorzugsweise genau zwei Trennwände, die vorzugsweise vertikal angeordnet sind, vorgesehen, welche direkt nach dem Verdampfer und am Bypassende beginnen oder sogar leicht, d.h. bis etwa in Höhe des Beginns des Luftaustritts aus dem Verdampfer, in den Bypass hineinragen. Die Trennwände verlaufen hierbei bevorzugt parallel zueinander.

Im Folgenden wird die Erfindung anhand dreier Ausführungsbeispiel unter Bezugnahme auf die Zeichnung näher erläutert. In der Zeichnung zeigen:
- Fig. 1: einen Schnitt durch eine Kraftfahrzeug-Fondklimaanlage gemäß dem ersten Ausführungsbeispiel,
- Fig. 2: einen Schnitt entlang Linie II-II von Fig. 1,
- Fig. 3: einen Schnitt durch eine Kraftfahrzeug-Fondklimaanlage gemäß dem zweiten Ausführungsbeispiel,
- Fig. 4: einen Schnitt entlang Linie IV-IV von Fig. 2,
- Fig. 5: einen Schnitt durch eine Kraftfahrzeug-Fondklimaanlage gemäß dem dritten Ausführungsbeispiel, und
- Fig. 6: einen Schnitt entlang Linie VI-VI von Fig. 5.

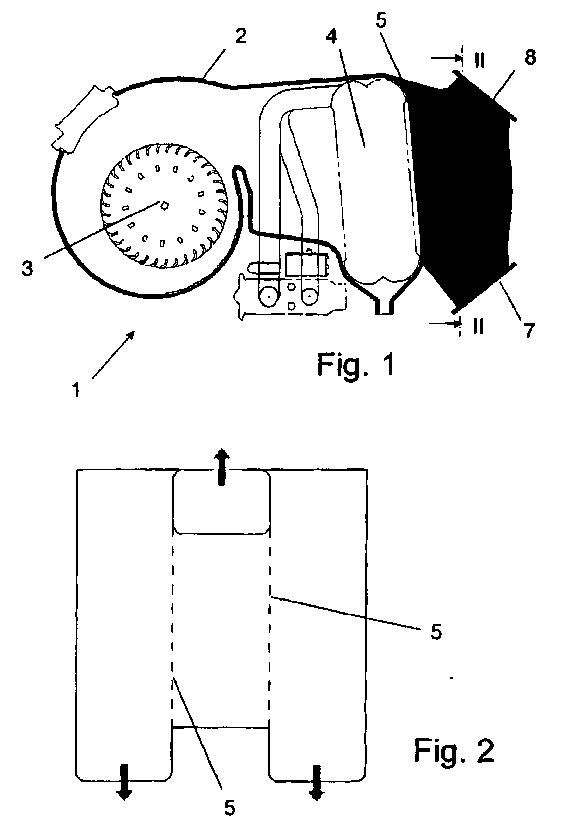

Eine in den Figuren 1 und 2 dargestellte Kraftfahrzeug-Fondklimaanlage 1 gemäß dem ersten Ausführungsbeispiel, die in der Mittelkonsole eines Kraftfahrzeugs angeordnet ist, weist ein in einem Kunststoff-Gehäuse 2 angeordnetes Gebläse 3 und einen Verdampfer 4 für die Klimatisierung der dem Fahrzeuginnenraum zuzuführenden Luft auf. Der Aufbau der Fondklimaanlage 1 ist hierbei vorliegend spiegelsymmetrisch zur Mittelebene. Die klimatisierte Luft wird dem Fahrzeuginnenraum über ein Luftkanalsystem mit zwei Luftdüsen in der linken und rechten B-Säule und einer Mitteldüse (nicht dargestellt) zugeführt, wobei die dem Fahrzeuginnenraum zuzuführende Luftmenge zentral über die Gebläseleistung, die Lufttemperatur über die Verdampferleistung und die Luftverteilung auf die einzelnen Düsen über die Düseneinstellungen am Luftaustritt der Düsen durch die Insassen regelbar ist.

Um die gewünschte, gleichmäßige Luftverteilung unter Ausgleich des Druckverlusts in den einzelnen Luftkanälen 7, 8 des Luftkanalsystems zu den jeweiligen Düsen, insbesondere dem erhöhten Druckverlust in den deutlich längeren Luftkanälen 7 zu den B-Säulendüsen, zu ermöglichen, sind im Gehäuse 2 nach dem Verdampfer 4, vor dem Austritt der Luft in das Luftkanalsystem zwei senkrechte, parallel zueinander verlaufende Trennwände 5 vorgesehen, welche direkt nach dem Verdampfer 4 den Luftstrom auf die drei Luftkanäle 7, 8 zu den jeweiligen Düsen verteilen. Vorliegend sind - auf Grund der entsprechenden Druckverluste in den Luftkanälen - die Trennwände 5 gleichmäßig über die Breite des Verdampfers 4 verteilt. Die Luftkanäle 7 zu den B-Säulendüsen sind hierbei außenseitig, der Luftkanal 8 zur Mitteldüse mittig angeordnet, wobei die Luft zur Mitteldüse schräg nach oben, die Luft zu den B-Säulendüsen schräg nach unten weitergeleitet wird (vgl. Fig. 2), und der Raum zwischen dem Verdampfer 4 und dem Luftkanalaustritt zu dem zur Mitteldüse führenden Luftkanal 8 eine geringere Höhe als die beiden außenseitig angeordneten Räume aufweist.

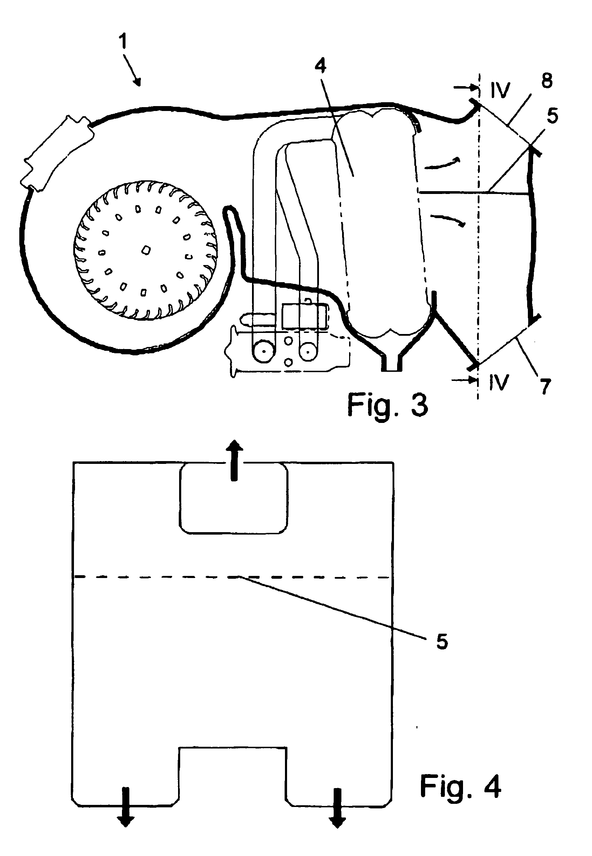

Gemäß dem in den Figuren 3 und 4 dargestellten zweiten Ausführungsbeispiel ist die Fondklimaanlage 1 im Wesentlichen entsprechend der des zuvor beschriebenen ersten Ausführungsbeispiels ausgebildet, jedoch ist vortiegend nur eine einzige, waagerecht verlaufende Trennwand 5 vorgehen, welche direkt nach dem Verdampfer 4 den Luftstrom auf die Luftkanäle 7, 8 zu den B-Säulen und die Mitteldüse verteilt. Auf Grund der automatisch gleichmäßigen Luftverteilung zwischen den beiden Luftkanälen zu den B-Säulendüsen, ist vorliegend keine erzwungene Aufteilung der Luft zwischen denselben erforderlich.

Gemäß einer nicht in der Zeichnung dargestellten Variante des zweiten Ausführungsbeispiels ist eine weitere Trennwand senkrecht angeordnet, wobei diese im Gehäuse unten bis zur waagerecht verlaufenden Trennwand reicht.

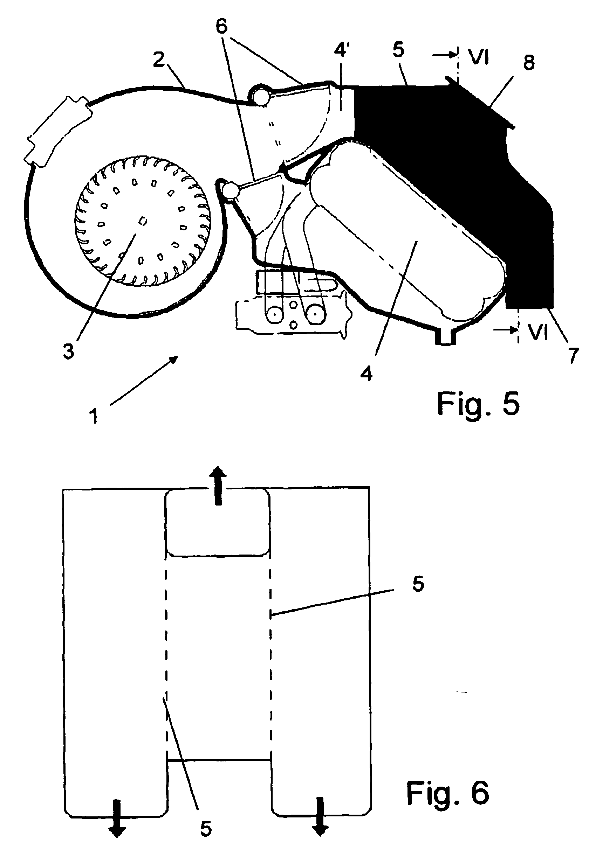

Figuren 5 und 6 zeigen ein drittes Ausführungsbeispiel einer erfindungsgemäßen Kraftfahrzeug-Fondklimaanlage 1, die in der Mittelkonsole eines Kraftfahrzeugs angeordnet ist. Sie weist ein in einem Kunststoff-Gehäuse 2 angeordnetes Gebläse 3 und einen Verdampfer 4 sowie einen Bypass 4' auf, der im Gehäuse 2 vorliegend oberhalb des Verdampfer 4 angeordnet ist, und es ermöglicht, Luft um den Verdampfer 4 herum zu führen. Der Bypass 4' mündet hierbei in den gleichen Raum ein, in welchen auch die durch den Verdampfer 4 strömende Luft gelangt. Im Gegensatz zu den vorigen Ausführungsbeispielen ist der Verdampfer 4 schräg im Gehäuse 2 angeordnet, so dass sich die Bauhöhe trotz des Bypasses 4' nicht oder nur unwesentlich vergrößert.

Der Luftstrom durch den Verdampfer 4 und/oder den Bypass 4' wird mittels zweier im Bereich der Verzweigung dem Kanal durch den Verdampfer 4 und Bypass 4' angeordneter Klappen 6 auf an sich bekannte Weise geregelt, wobei in Fig. 5 die Stellung 100% Bypass, also keine Kühlung der Luft, dargestellt ist. Die klimatisierte Luft wird dem Fahrzeuginnenraum über ein dem ersten und zweiten Ausführungsbeispiel entsprechendes Luftkanalsystem mit zwei Luftdüsen in der linken und rechten B-Säule und einer Mitteldüse (nicht dargestellt) zugeführt, wobei die dem Fahrzeuginnenraum zuzuführende Luftmenge zentral über die Gebläseleistung, die Lufttemperatur über die Verdampferleistung in Verbindung mit der Klappenstellung der Klappen 6 und die Luftverteilung auf die einzelnen Düsen über die Düseneinstellungen am Luftaustritt der Düsen durch die Insassen regelbar ist.

Um die gewünschte, gleichmäßige Luftverteilung unter Ausgleich des Druckverlusts in den einzelnen Luftkanälen 7, 8 des Luftkanalsystems zu den jeweiligen Düsen, insbesondere dem erhöhten Druckverlust in den Luftkanälen 7 zu den B-Säulendüsen, zu ermöglichen, sind im Gehäuse 2 nach dem Verdampfer 4 und bis leicht in den Bypass 4' hineingezogen, und vor dem Austritt der Luft in das Luftkanalsystem zwei senkrechte, parallel zueinander ververlaufende Trennwände 5 vorgesehen, welche direkt nach dem Verdampfer 4 und/oder dem Bypass 4' den Luftstrom auf die drei Luftkanäle zu den jeweiligen Düsen verteilen. Vorliegend sind - auf Grund der entsprechenden Druckverluste in den Luftkanälen - die Trennwände 5 gleichmäßig über die Breite des Verdampfers 4 bzw. Bypasses 4' verteilt. Die Luftkanäle zu den B-Säulendüsen sind wiederum hierbei außenseitig, der Luftkanal zur Mitteldüse mittig angeordnet, wobei die Luft zur Mitteldüse schräg nach oben, die Luft zu den B-Säulendüsen schräg nach unten weitergeleitet wird (vgl. Fig. 6), und der Raum zwischen dem Verdampfer 4 und dem Luftkanalaustritt zu dem zur Mitteldüse führenden Luftkanal 8 eine geringere Höhe als die beiden außenseitig angeordneten Räume aufweist, wobei der Luftkanalaustritt zur Mitteldüse etwa in Höhe des Bypasses 4' angeordnet ist, und auch eine entsprechende Kanalhöhe aufweist. Die Trennwände verbessern in diesem Ausführungsbeispiel nicht nur die Luftverteilung, sondern auch die Luftmischung, da ohne die Trennwände 5 warme Luft bevorzugt zur Mitteldüse und die kalte Luft bevorzugt zu den B-Säuledüsen strömen würde.

## Patentansprüche

1. Fondbelüftungs-Heizungs- oder -Klimaanlage für ein Fahrzeug mit einem in einem Gehäuse (2) angeordneten Gebläse (3) und einem einem Luftkanalsystem mit zumindest einer ersten und einer zweiten Düse, wobei über das Luftkanalsystem Luft den Düsen zuführbar ist und sich die Druckverluste in den Luftkanälen zwischen Gebläse (3) und erster Düse und Gebläse (3) und zweier Düse unterscheiden, **dadurch gekennzeichnet, dass** im Gehäuse (2) mindestens eine Trennwand (5) für die Luftverteilung auf die erste und zweite Düse vorgesehen ist, wobei die Luftverteilung durch die Anordnung der Trennwand (5) oder Trennwände (5) festgelegt ist.

2. Fondbelüftungs-Heizungs- oder -Klimaanlage nach Anspruch 1, **dadurch gekennzeichnet, dass** im Gehäuse (2) ein Verdampfer (4) und/oder ein Heizer angeordnet ist.

3. Fondbelüftungs-Heizungs- oder -Klimaanlage nach Anspruch 1 oder 2, **dadurch gekennzeichnet, dass** die erste Düse eine Mitteldüse ist.

4. Fondbelüftungs-Heizungs- oder -Klimaanlage nach einem der vorhergehenden Ansprüche, **dadurch gekennzeichnet, dass** die zweite Düse eine B-Säulendüse des Fahrzeugs ist.

5. Fondbelüftungs-Heizungs- oder -Klimaanlage nach Anspruch 4, **dadurch gekennzeichnet, dass** mindestens zwei B-Säulendüsen vorgesehen sind.

6. Fondbelüftungs-Heizungs- oder -Klimaanlage nach einem der vorhergehenden Ansprüche, **dadurch gekennzeichnet, dass** die Trennwand (5) oder Trennwände (5) direkt nach dem Verdampfer (4) beginnen.

7. Fondbelüftungs-Heizungs- oder -Klimaanlage nach einem der vorhergehenden Ansprüche, **dadurch gekennzeichnet, dass** eine senkrecht zur Mittelebene der Fondklimaanlage (1) angeordnete Trennwand (5) vorgesehen ist.

8. Fondbelüftungs-Heizungs- oder -Klimaanlage nach Anspruch 7, **dadurch gekennzeichnet, dass** die Trennwand (5) waagerecht angeordnet ist.

9. Fondbelüftungs-Heizungs- oder -Klimaanlage nach einem der vorhergehenden Ansprüche, **dadurch gekennzeichnet, dass** ein Bypass (4') um einen Verdampfer (4) vorgesehen ist.

10. Fondbelüftungs-Heizungs- oder -Klimaanlage nach Anspruch 9, **dadurch gekennzeichnet, dass** der Bypass (4') räumlich oberhalb des Verdampfers (4) angeordnet ist.

11. Fondbelüftungs-Heizungs- oder -Klimaanlage nach Anspruch 9 oder 10, **dadurch gekennzeichnet, dass** die Trennwand (5) oder Trennwände (5) direkt nach dem Verdampfer (4) und am Bypassende beginnen oder leicht in den Bypass (4') hineinragen.

12. Fondbelüftungs-Heizungs- oder -Klimaanlage nach einem der vorhergehenden Ansprüche, **dadurch gekennzeichnet, dass** genau zwei Trennwände (5) vorgesehen sind.

13. Fondbelüftungs-Heizungs- oder -Klimaanlage nach Anspruch 12, **dadurch gekennzeichnet, dass** die Trennwände (5) parallel zueinander verlaufen.

14. Fondbelüftungs-Heizungs- oder -Klimaanlage nach Anspruch 12 oder 13, **dadurch gekennzeichnet, dass** die Trennwände (5) vertikal angeordnet sind.

15. Fondbelüftungs-Heizungs- oder -Klimaanlage nach einem der vorhergehenden Ansprüche, **dadurch gekennzeichnet, dass** das Gehäuse (2) in normaler Strömungsrichtung der Luft gesehen nach dem Verdampfer (4) und ggf. einem Bypass (4') frei von den Luftstrom regelnden betätigbaren Elementen ist.

## Claims

1. Rear ventilating, heating or air-conditioning system for a vehicle, with a fan (3) arranged in a housing (2) and an air duct system with at least one first and one second nozzle, such that air can be delivered to the nozzles through the air duct system and the pressure loss in the air ducts between the fan (3) and the first nozzle and between the fan (3) and the second nozzle are different, **characterised in that** at least one partition wall (5) is provided in the housing (2) for distributing air to the first and second nozzles, the air distribution being determined by the arrangement of the partition wall (5) or partition walls (5).

2. Rear ventilating, heating or air-conditioning system according to Claim 1, **characterised in that** an evaporator (4) and/or a heater is arranged in the housing (2).

3. Rear ventilating, heating or air-conditioning system according to Claims 1 or 2, **characterised in that** the first nozzle is a central nozzle.

4. Rear ventilating, heating or air-conditioning system according to any of the preceding claims, **characterised in that** the second nozzle is a B-column nozzle of the vehicle.

5. Rear ventilating, heating or air-conditioning system according to Claim 4, **characterised in that** at least two B-column nozzles are provided.

6. Rear ventilating, heating or air-conditioning system according to any of the preceding claims, **characterised in that** the partition wall (5) or partition walls (5) begin directly after the evaporator (4).

7. Rear ventilating, heating or air-conditioning system according to any of the preceding claims, **characterised in that** a partition wall (5) arranged perpendicularly to the midplane of the air-conditioning unit (1) is provided.

8. Rear ventilating, heating or air-conditioning system according to Claim 7, **characterised in that** the partition wall (5) is arranged horizontally.

9. Rear ventilating, heating or air-conditioning system according to any of the preceding claims, **characterised in that** a bypass (4') around an evaporator (4) is provided.

10. Rear ventilating, heating or air-conditioning system according to Claim 9, **characterised in that** the bypass (4') is arranged spatially above the evaporator (4).

11. Rear ventilating, heating or air-conditioning system according to Claims 9 or 10, **characterised in that** the partition wall (5) or partition walls (5) begin directly after the evaporator (4) and at the end of the bypass, or project slightly into the bypass (4').

12. Rear ventilating, heating or air-conditioning system according to any of the preceding claims, **characterised in that** exactly two partition walls (5) are provided.

13. Rear ventilating, heating or air-conditioning system according to Claim 12, **characterised in that** the partition walls (5) are parallel to one another.

14. Rear ventilating, heating or air-conditioning system according to Claim 12, **characterised in that** the partition walls (5) are arranged vertically.

15. Rear ventilating, heating or air-conditioning system according to any of the preceding claims, **characterised in that** viewed in the normal air flow direction, after the evaporator (4) and a bypass (4') if present, the housing (2) is free from elements that can be actuated to regulate the air flow.

## Revendications

1. Système de ventilation, de chauffage ou de climatisation de l'arrière, pour un véhicule, comprenant un ventilateur (3) disposé dans un carter (2) et un système de conduits d'air comportant au moins une première et une deuxième buse, où de l'air peut être fourni aux buses par le système de conduits d'air, et les pertes de pression dans les conduits d'air se différencient entre le ventilateur (3) et une première buse, et entre le ventilateur (3) et une deuxième buse,
**caractérisé en ce qu'**il est prévu, dans le carter (2), au moins une paroi de séparation (5) pour la répartition d'air sur la première et la deuxième buse, où la répartition d'air est déterminée par l'agencement de la paroi de séparation (5) ou des parois de séparation (5).

2. Système de ventilation, de chauffage ou de climatisation de l'arrière selon la revendication 1, **caractérisé en ce qu'**un évaporateur (4) et / ou un dispositif de chauffage est disposé dans le carter (2).

3. Système de ventilation, de chauffage ou de climatisation de l'arrière selon la revendication 1 ou 2, **caractérisé en ce que** la première buse est une buse centrale.

4. Système de ventilation, de chauffage ou de climatisation de l'arrière selon l'une quelconque des revendications précédentes, **caractérisé en ce que** la deuxième buse est une buse du montant B du véhicule.

5. Système de ventilation, de chauffage ou de climatisation de l'arrière selon la revendication 4, **caractérisé en ce qu'**il est prévu au moins deux buses du montant B.

6. Système de ventilation, de chauffage ou de climatisation de l'arrière selon l'une quelconque des revendications précédentes, **caractérisé en ce que** la paroi de séparation (5) ou des parois de séparation (5) commence(nt) directement en aval de l'évaporateur (4).

7. Système de ventilation, de chauffage ou de climatisation de l'arrière, selon l'une quelconque des revendications précédentes, **caractérisé en ce qu'**il est prévu une paroi de séparation (5) disposée perpendiculairement au plan médian du système de climatisation (1) de l'arrière.

8. Système de ventilation, de chauffage ou de climatisation de l'arrière selon la revendication 7, **caractérisé en ce que** la paroi de séparation (5) est disposée horizontalement.

9. Système de ventilation, de chauffage ou de climatisation de l'arrière selon l'une quelconque des revendications précédentes, **caractérisé en ce qu'**il est prévu une dérivation (4') autour d'un évaporateur (4).

10. Système de ventilation, de chauffage ou de climatisation de l'arrière selon la revendication 9, **caractérisé en ce que** la dérivation (4') est disposée, dans l'espace, au-dessus de l'évaporateur (4).

11. Système de ventilation, de chauffage ou de climatisation de l'arrière selon la revendication 9 ou 10, **caractérisé en ce que** la paroi de séparation (5) ou des parois de séparation (5) commence(nt) directement en aval de l'évaporateur (4) et au niveau de l'extrémité de la dérivation ou bien pénètxe(nt) légèrement dans la dérivation (4').

12. Système de ventilation, de chauffage ou de climatisation de l'arrière, selon l'une quelconque des revendications précédentes, **caractérisé en ce qu'**il est prévu, précisément, deux parois de séparation (5).

13. Système de ventilation, de chauffage ou de climatisation de l'arrière selon la revendication 12, **caractérisé en ce que** les parois de séparation (5) s'étendent parallèlement entre elles.

14. Système de ventilation, de chauffage ou de climatisation de l'arrière selon la revendication 12 ou 13, **caractérisé en ce que** les parois de séparation (5) sont disposées verticalement.

15. Système de ventilation, de chauffage ou de climatisation de l'arrière selon l'une quelconque des revendications précédentes, **caractérisé en ce que** le carter (2) est, vu dans la direction normale d'écoulement de l'air, disposé en aval de l'évaporateur (4) et, le cas échéant, d'une dérivation (4') exempte d'éléments commandant et régulant le flux d'air.
